# EUROPÄISCHE PATENTANMELDUNG

(11) **EP 2 896 806 A1**
(43) Veröffentlichungstag der Anmeldung: **22.07.2015**
(21) Anmeldenummer: 14151779.7
(22) Anmeldetag: 20.01.2014
(51) Int. Cl.: F02C 3/30, F02C 7/16

(54) **Verändern einer Nutzleistung einer Gasturbinenanlage**

(71) Anmelder: Siemens Aktiengesellschaft, 80333 München (DE)
(72) Erfinder: Weidner, Frank, 45481 Mülheim an der Ruhr (DE)

(57) **Zusammenfassung**

Die Erfindung betrifft ein Verfahren zum Verändern einer Nutzleistung (58) einer Gasturbinenanlage (2).

Um eine vorteilhafte technische Lehre zum Verändern einer Nutzleistung einer Gasturbinenanlage zu erreichen wird vorgeschlagen, dass eine Nutzleistung (58) der Gasturbinenanlage ermittelt wird, diese Nutzleistung (58) mit einem Nutzleistungs-Sollwert (66) verglichen wird, in Abhängigkeit dieses Vergleichs und zumindest eines Wertes zumindest einer Gasturbinenzustandsgröße (60) zumindest eine Maßnahme (74, 76) zum Verändern der Nutzleistung (58) aus mehreren in der Gasturbinenanlage (2) implementierten Maßnahmen (74, 76) ausgewählt wird und diese zumindest eine ausgewählte Maßnahme (74, 76) zum Verändern der Nutzleistung (58) der Gasturbinenanlage (2) eingeleitet wird.

Ferner betrifft die Erfindung eine Anordnung zur Steuerung einer Nutzleistung einer Gasturbinenanlage sowie eine Gasturbinenanlage aufweisend einen Verdichtereintritt und eine Brennereinheit.

## Beschreibung

Die Erfindung betrifft ein Verfahren zum Verändern einer Nutzleistung einer Gasturbinenanlage und eine Anordnung zur Steuerung einer Nutzleistung einer Gasturbinenanlage sowie eine Gasturbinenanlage aufweisend einen Verdichtereintritt und eine Brennereinheit.

Gasturbinenanlagen bzw. Gasturbinen werden unter anderem zur Energieerzeugung in Gaskraftwerken betrieben. Dabei ist ein Erzielen einer möglichst hohen, nahezu konstanten Leistung der Gasturbinenanlage - auch und gerade bei widrigen Betriebsrandbedingungen, wie beispielsweise einer hohen Umgebungslufttemperatur, welche im Allgemeinen zu einer Reduzierung der Nutzleistung der Gasturbine führt - von maßgeblicher technischer und wirtschaftlicher Bedeutung für die Betreiber solcher Anlagen.

Gasturbinen sind Verbrennungskraftmaschinen, die Umgebungsluft ansaugen, diese in einem Verdichter verdichten, aus dieser verdichteten Luft und einem Brennstoff in einer Brennkammer bzw. Brennereinheit ein zündfähiges Strömungsmedium herstellen, dieses zünden und in einer Turbine bzw. Turbineneinheit entspannen, wobei eine so freiwerdende thermische Energie in mechanische Energie gewandelt wird. Die dabei in der Turbine generierte mechanische Leistung wird neben dem Teil, der zur Umsetzung in elektrische Leistung durch einen der Gasturbinenanlage nachgeschalteten Generator genutzt wird, zum Teil auch an den Verdichter zur Verrichtung von Kompressionsarbeit abgeführt.

Die Leistung einer Gasturbine hängt unter anderem vom Massenstrom des die Gasturbine durchströmenden Strömungsmediums ab. Folglich treten unter erhöhten Umgebungslufttemperaturen, also bei verringerter Luftdichte, prozessbedingt Leistungseinbußen bzw. Leistungsschwankungen auf. Außerdem steigt die zu verrichtende Kompressionsarbeit im Verdichter der Gasturbinenanlage proportional mit der Verdichtereintrittstemperatur. Dadurch sinkt bzw. schwankt unter solchen Bedingungen - auch bei ggf. konstant gehaltener Turbinenleistung - der Teil der Leistung, der als Nutzleistung, beispielsweise zur Wandlung in elektrische Energie durch einen nachgeschalteten Generator, zur Verfügung steht.

Aus dem Stand der Technik sind verschiedene Verfahren zum Verändern einer Nutzleistung einer Gasturbinenanlage bekannt, die in erster Linie darauf abzielen, die Temperatur der Ansaugluft bzw. in den Verdichtereintritt eintretenden Strömungsmediums, also die Verdichtereintrittstemperatur, zu verändern, insbesondere zu kühlen. Solche Verfahren sind das sogenannte EVAP Cooling (dt.: Verdunstungskühlung), das sogenannte Fogging (dt.: Einnebelung) und das sogenannte Compression Inlet Air Chilling (CIAC - dt.: Verdichtereinlassluftkühlung).

Weitere aus dem Stand der Technik bekannte Verfahren Verändern einer Nutzleistung einer Gasturbinenanlage sind das sogenannte Wet-Compression-Verfahren (dt.: Nassverdichtung), die sogenannte NOx-Wassereindüsung, Verfahren zur hydraulischen Rotorspaltoptimierung, Verfahren zur Änderung von Schaufelanstellwinkeln zur Strömungsoptimierung, eine Erhöhung einer Verbrennungstemperatur und Designänderungen wie z.B. ein verbessertes Turbinenschaufel-Design.

Es ist eine Aufgabe der vorliegenden Erfindung, eine vorteilhafte technische Lehre zum Verändern einer Nutzleistung einer Gasturbinenanlage anzugeben, bei dem über ein weites Spektrum von Umgebungsbedingungen, insbesondere von Umgebungslufttemperaturen und Umgebungsluftfeuchten, eine vorteilhafterweise hohe, nahezu konstante Nutzleistung erzielt werden kann.

Diese Aufgabe wird erfindungsgemäß gelöst mit einem Verfahren zum Verändern einer Nutzleistung einer Gasturbinenanlage, einer Anordnung zur Steuerung einer Nutzleistung einer Gasturbinenanlage und einer Gasturbinenanlage mit den Merkmalen des jeweiligen unabhängigen Anspruchs. Zweckmäßige Ausgestaltungen und Vorteile der Erfindung ergeben sich aus den weiteren Ansprüchen und der Beschreibung und beziehen sich auf das Verfahren, die Anordnung und die Gasturbinenanlage.

Die Erfindung nach dem Verfahren sieht vor, dass eine Nutzleistung der Gasturbinenanlage ermittelt wird, diese Nutzleistung mit einem Nutzleistungs-Sollwert verglichen wird, in Abhängigkeit dieses Vergleichs und zumindest eines Wertes zumindest einer Gasturbinenzustandsgröße zumindest eine Maßnahme zum Verändern der Nutzleistung aus mehreren in der Gasturbinenanlage implementierten Maßnahmen ausgewählt wird und diese zumindest eine ausgewählte Maßnahme zum Verändern der Nutzleistung der Gasturbinenanlage eingeleitet wird.

Bei dem Verfahren wird so eine Nutzleistung der Gasturbinenanlage ermittelt.

Als Nutzleistung wird im Folgenden der Teil der von der Gasturbinenanlage generierten Leistung bezeichnet, der beispielsweise zum Antreiben eines der Gasturbine nachgeschalteten Generators zur Umwandlung in elektrische Leistung genutzt werden kann. Die Nutzleistung ist ein Anteil einer Gasturbinengesamtleistung, die beispielsweise auch eine Verdichterantriebsleistung umfassen kann.

Unter "ermitteln" bzw. einer "Ermittlung" ist im gegebenen Zusammenhang eine zweckmäßige Bestimmung, eine Feststellung, eine Messung - jeweils in mittelbarer oder unmittelbarer Weise - oder eine Berechnung eines Wertes, beispielsweise einer Gasturbinenzustandsgröße, zu verstehen.

Bei dem Verfahren wird die Nutzleistung mit einem Nutzleistungs-Sollwert verglichen. Der Nutzleistungs-Sollwert kann im gegebenen Kontext ein vorgebbarer Wert einer zu erreichenden und/oder einzuhaltenden Nutzleistung der Gasturbinenanlage sein, insbesondere ein Wert, der höher (also auch kleiner) ist als ein Wert einer aktuell ermittelten Nutzleistung. Der Vergleich der Nutzleistung mit dem Nutzleistungs-Sollwert kann insbesondere über ein Vergleichsglied bzw. eine Steuereinheit eines Steuer- oder Regelkreises erfolgen und eine arithmetische Differenzbildung umfassen.

Bei dem Verfahren wird in Abhängigkeit dieses Vergleichs und zumindest eines Wertes zumindest einer Gasturbinenzustandsgröße zumindest eine Maßnahme zum Verändern der Nutzleistung aus mehreren in der Gasturbinenanlage implementierten Maßnahmen ausgewählt.

Im Folgenden meint "implementiert" bzw. "Implementierung" eine zweckmäßige Ausstattung, insbesondere der Gasturbinenanlage, wobei diese Ausstattung beispielsweise ein integraler Bestandteil der Gasturbinenanlage, ein separates Nebenaggregat, eine Art von Zusatzvorrichtung und/oder eine soft- oder hardwarebasierte Anordnung und/oder Verfahrensstrategie/Verfahrensweise zum Betrieb der Gasturbinenanlage sein kann. D.h. eine solche Implementierung kann hardware-, soft-ware- oder hardware- und softwarebasiert sein.

Durch das Auswählen zumindest einer Maßnahme aus mehreren in der Gasturbinenanlage implementierten Maßnahmen kann eine besonders an die jeweiligen Vor- und Nachteile der Maßnahme bzw. Maßnahmen bzw. an die jeweiligen Umgebungsrandbedingungen angepasste Veränderung der Nutzleistung, insbesondere über ein weites Spektrum von Umgebungsbedingungen, beispielsweise von Temperaturen und/oder Feuchten einer Umgebungsluft, erfolgen. Solche Maßnahmen sind beispielsweise ein Nassverdichtungsverfahrens (Wet Compression (WetC)) und/oder eine NOx-Wassereindüsung und/oder eine Verdichtereintrittsluftkühlung (Compression Inlet Air Chilling (CIAC)) und/oder eine hydraulische Rotorspaltoptimierung und/oder einer Leitschaufelverstellung.

Diese Auswahl erfolgt - neben der Abhängigkeit von dem beschriebenen Vergleich der Nutzleistung und dem Nutzleistungs-Sollwert - von besonderem Vorteil auch in Abhängigkeit zumindest eines Wertes zumindest einer Gasturbinenzustandsgröße, wie beispielsweise einer Verdichtereintrittstemperatur und/oder einer Emission der Gasturbinenanlage. Auf diese Weise kann eine besonders an die Gegebenheiten angepasste und präzise Veränderung der Nutzleistung erfolgen, insbesondere derart, dass eine nahezu konstante Nutzleistung bei sich ändernden Umgebungsbedingungen erreicht werden kann.

Bei dem Verfahren wird diese zumindest eine ausgewählte Maßnahme zum Verändern der Nutzleistung der Gasturbinenanlage eingeleitet. Dabei bezieht sich "eingeleitet" bzw. "Einleitung" im gegebenen Zusammenhang zum einen auf das Auslösen der Maßnahme als solches, beispielsweise durch die Betätigung einer entsprechenden Einrichtung, zum anderen auf das Bewirken der Maßnahme im verfahrenstechnischen Sinne. Die Nutzleistung wird durch das Einleiten der Maßnahme, das typischerweise eine oder mehrere Sekunden dauern kann, über einen Zeitraum von üblicherweise einer bis mehreren Minuten verändert, insbesondere erhöht. Ein weiterer besonderer Vorteil ist dabei, dass mehrere Maßnahmen eingeleitet werden können, beispielsweise um einen besonders hohen Nutzleistungsgradienten zu erreichen. Ferner von besonderem Vorteil können mehrere Maßnahmen mit jeweils verschiedenartigen Vor- und Nachteilen unter Berücksichtigung dieser Vor- und Nachteile ausgewählt und derart kombiniert werden, dass eine Verstärkung von vorteilhaften und/oder Reduzierung von nachteiligen Auswirkungen in Kombination erreicht wird. Insbesondere kann abhängig von Emissionsanforderungen und Wirkungsgradanforderungen eine Gewichtung der jeweiligen Maßnahmen bzw. einer Betriebsart erfolgen.

Außerdem sieht die Erfindung nach der Anordnung vor, dass eine Ermittlungseinrichtung derart eingerichtet ist, dass die Nutzleistung ermittelbar ist und eine Steuereinheit derart eingerichtet ist, dass die Nutzleistung vergleichbar ist mit einem Nutzleistungs-Sollwert, wobei in Abhängigkeit dieses Vergleichs zumindest eine Maßnahme unter mehreren in der Gasturbinenanlage implementieren Maßnahmen zum Verändern der Nutzleistung der Gasturbinenanlage auswählbar ist und diese zumindest eine ausgewählte Maßnahme zum Verändern der Nutzleistung der Gasturbinenanlage einleitbar ist.

Vorteilhafterweise ist die Steuereinheit zur Einleitung einer Eindüsung von Wasser in einen Verdichtereintritt und/oder in eine Brennkammer einer Gasturbinenanlage vorbereitet. Dadurch kann in einfacher Weise eine Einleitung insbesondere eines Wet-Compression-Verfahrens oder einer NOx-Wassereindüsung gesteuert werden.

Des Weiteren betrifft die Erfindung eine Gasturbinenanlage aufweisend einen Verdichtereintritt und eine Brennereinheit. Eine mit nahezu konstanter Nutzleistung betreibbare Gasturbinenanlage kann erfindungsgemäß eine Wassereindüsungsvorrichtung zum Eindüsen von Wasser in den Verdichtereintritt, eine Wassereindüsungsvorrichtung zum Eindüsen von Wasser in die Brennereinheit und eine erfindungsgemäße Anordnung aufweisen.

Bevorzugte Weiterbildungen der Erfindung ergeben sich auch aus den abhängigen Ansprüchen. Die Weiterbildungen beziehen sich sowohl auf das erfindungsgemäße Verfahren, auf die erfindungsgemäße Anordnung wie auch auf die erfindungsgemäße Gasturbinenanlage.

Die Erfindung und die beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer beschriebenen Weiterbildung möglich durch ein computerlesbares Speichermedium, auf welchem ein Computerprogramm gespeichert ist, welches die Erfindung oder die Weiterbildung ausführt. Auch können die Erfindung und/oder jede beschriebene Weiterbildung durch ein Computerprogrammerzeugnis realisiert sein, welches ein Speichermedium aufweist, auf welchem ein Computerprogramm gespeichert ist, welches die Erfindung und/oder die Weiterbildung ausführt.

In einer vorteilhaften Ausführungsform der Erfindung verändert die zumindest eine Maßnahme der in der Gasturbinenanlage implementierten Maßnahmen eine Temperatur und/oder eine Feuchtigkeit und/oder einen Massenstrom eines die Gasturbinenanlage durchströmenden Strömungsmediums und/oder einen Radialspalt zwischen einem Rotor und einer Gehäusewand der Gasturbinenanlage und/oder einen Anstellwinkel zumindest einer Schaufel eines Verdichters der Gasturbinenanlage.

Zweckmäßigerweise wird die Temperatur des die Gasturbinenanlage durchströmenden Strömungsmediums insbesondere gekühlt. Dadurch kann in besonders einfach Art und Weise, je nach baulicher Umsetzung der Kühlung, eine Verringerung der zu verrichtenden Verdichterarbeit und/oder eine optimierte Flammtemperatur zur Einspritzung erhöhter Brennstoffmengen, jeweils zur Erhöhung der Nutzleistung der Gasturbinenanlage, erreicht werden.

Vorteilhafterweise wird die Feuchtigkeit des die Gasturbinenanlage durchströmenden Strömungsmediums erhöht. Dadurch kann mittelbar eine Verringerung der Verdichterarbeit, also eine Erhöhung der Nutzleistung erzielt werden.

In bevorzugter Weise wird der Massenstrom des die Gasturbinenanlage durchströmenden Strömungsmediums insbesondere erhöht. Zur Erhöhung der Nutzleistung kann so auf besonders einfache Weise, beispielsweise durch eine Drehzahlerhöhung der Gasturbinenanlage, des Verdichters, und/oder eine Anhebung eines in die Brennkammer einzuspritzenden Brennstoffmassenstroms erfolgen.

Vorteilhaft ist insbesondere eine Verringerung eines Radialspalts zwischen einem Rotor und einer Gehäusewand der Gasturbinenanlage. Dadurch kann der Wirkungsgrad der Gasturbinenanlage, also die Nutzleistung bei einem unveränderten Brennstoffmassenstrom besonders effektiv gesteigert werden.

Durch die Veränderung des Anstellwinkels zumindest einer Schaufel des Verdichters der Gasturbinenanlage, insbesondere einer Schaufelreihe, kann in einfacher Weise der Massenstrom und damit die Leistung der Gasturbinenanlage erhöht werden. Vorteilhafterweise kann auf die Weise auch das Strömungsprofil bzw. der Anströmwinkel des Strömungsmediums im Verdichter optimiert werden, zur Erhöhung des Wirkungsgrades bzw. der Nutzleistung der Gasturbinenanlage.

Gemäß einer weiteren bevorzugten Ausbildung der Erfindung wird die zumindest eine aus den mehreren implementierten Maßnahmen eingeleitete Maßnahme mittels eines Nassverdichtungsverfahrens (Wet Compression (WetC)) und/oder einer NOx-Wassereindüsung und/oder einer Verdichtereintrittsluftkühlung (Compression Inlet Air Chilling (CIAC)) und/oder einer hydraulischen Rotorspaltoptimierung und/oder einer eine Leitschaufelverstellung bewirkt.

Durch das Bewirken der zumindest einen eingeleiteten Maßnahme mittels des Nassverdichtungsverfahrens bzw. mittels des Wet-Compression-Verfahrens kann besonders vorteilhaft eine Verringerung der Verdichterarbeit durch eine sogenannte Zwischenkühlung erfolgen, wodurch folglich der als Nutzleistung zur Verfügung stehende Anteil an der Gesamtleistung der Gasturbinenanlage steigt. D.h. durch eine Eindüsung von Wasser in den Verdichtereintritt bzw. in das Ansaughaus der Gasturbinenanlage findet nachfolgend eine Verdampfung innerhalb des Verdichters statt, was zu einer Leistungssteigerung führt.

Wird die zumindest eine eingeleitete Maßnahme mittels der NOx-Wassereindüsung bewirkt, kann besonders vorteilhaft eine Veränderung, insbesondere Erhöhung, der Nutzleistung erfolgen, derart, dass die zumindest eine eingeleitete Maßnahme über ein weites Spektrum an Umgebungsbedingungen, insbesondere Luftfeuchte- und Temperaturbedingungen, wirksam anwendbar ist. D.h. durch eine Eindüsung von Wasser in eine Brennkammer bzw. Brennereinheit der Gasturbinenanlage sinkt die eine Flammtemperatur und durch eine Verdampfung des Wassers steigt der Massenstrom durch die Gasturbinenanlage, was zu einer Leistungssteigerung führt.

Durch das Bewirken der zumindest einen eingeleiteten Maßnahme mittels der Verdichtereintrittsluftkühlung bzw. dem Compression Inlet Air Chilling kann besonders vorteilhaft eine effektive Kühlung, insbesondere unter extrem heißen Umgebungsbedingungen, erfolgen.

Vorteilhaft ist insbesondere die hydraulische Rotorspaltoptimierung, wodurch der Wirkungsgrad der Gasturbinenanlage, also die Nutzleistung bei einem unveränderten Brennstoffmassenstrom besonders effektiv gesteigert werden kann.

Durch die Leitschaufelverstellung kann in einfacher Weise der Massenstrom und damit die Leistung der Gasturbinenanlage erhöht werden. Vorteilhafterweise kann auf die Weise auch das Strömungsprofil bzw. der Anströmwinkel des Strömungsmediums im Verdichter optimiert werden, zur Erhöhung des Wirkungsgrades bzw. der Nutzleistung der Gasturbinenanlage.

Vorteilhafterweise kann die zumindest eine Gasturbinenzustandsgröße eine Verdichtereintrittstemperatur und/oder ein Wirkungsgrad der Gasturbinenanlage und/oder eine Emission der Gasturbinenanlage sein. Insbesondere können auch mehr als eine Gasturbinenzustandsgröße der Auswahl der zumindest einen Maßnahmen zugrunde gelegt sein. Dadurch kann eine besonders variable Veränderung der Nutzleistung in Abhängigkeit mehrer Kriterium unter Einleitung der jeweils effektivsten Maßname bzw. Maßnahmen vorgenommen werden.

Vorteilhafterweise kann so sichergestellt werden, dass die Maßnahme bzw. Maßnahmen jeweils bevorzugt unter den für die jeweilige Maßnahme bzw. Maßnahmen vorteilhaften Umgebungsbedingungen ausgewählt und eingeleitet werden.

In einer vorteilhaften Ausführungsvariante ist der zumindest eine Wert der zumindest einen Gasturbinenzustandsgröße ein aktuell ermittelter Wert und/oder ein vorgebbarer maßnahmenspezifischer Wert. Vorteilhafterweise kann so besonders einfach eine Abhängigkeit bezüglich sich ändernder Umgebungsbedingungen bzw. einer sich beispielsweise über der Zeit ändernden Gasturbinenzustandsgröße hergestellt werden.

Ist der zumindest eine Wert der zumindest einen Gasturbinenzustandsgröße ein vorgebbarer maßnahmenspezifischer Wert, kann das Verfahren besonders einfach an einzelne Maßnahmen, insbesondere deren Grenzwerte, also Werte bei deren Erreichung die Maßnahme bzw. die Maßnahmen aus Effizienz- und/oder Sicherheits- und/oder technischen Gründen nicht mehr eingeleitet werden soll bzw. sollen - angepasst werden. Vorteilhafterweise kann so unter anderem eine maßnahmenspezifische Grenztemperatur gegen Eisbildung, insbesondere im Verdichter, vorgegeben werden, oberhalb derer - und nur oberhalb derer - die Maßnahme mittels Nassverdichtung bzw. Wet-Compression bewirkt werden soll. Dabei kann das Nassverdichtungsverfahren vorteilhafterweise gemeinsam mit einer oder mehreren anderen ausgewählten Maßnahme bzw. Maßnahmen bewirkt werden.

Zweckmäßigerweise wird das Verfahren jeweils für eine Mehrzahl aufeinanderfolgender Zeitpunkte, d.h. für einen Zeitverlauf, durchgeführt. Typischerweise wird das Verfahren also für einen Zeitverlauf dergestalt durchgeführt, dass bei Erreichen einer Verdichtereintrittstemperatur - also eines Wertes einer bestimmten Gasturbinenzustandsgröße - , beispielsweise zu einer Zeit t1, eine bestimmte der in der Gasturbinenanlage implementierten Maßnahmen ausgewählt und eingeleitet wird und bei Überschreiten einer anderen Verdichtereintrittstemperatur und/oder eines Emissionswertes, beispielsweise zu einer Zeit t2, eine andere Maßnahme ausgewählt und eingeleitet wird.

Bei einer vorteilhaften Weiterbildung ist die Gasturbinenzustandsgröße eine Verdichtereintrittstemperatur und der Wert der Gasturbinenzustandsgröße ein aktuell ermittelter Wert, so beispielsweise die "aktuelle Verdichtereintrittstemperatur", wobei bei einem Erreichen eines vorgebbaren Wertes einer Verdichtereintrittstemperatur genau eine Maßnahme oder mehrere Maßnahmen eingeleitet wird bzw. werden. Dadurch kann das Verfahren insbesondere vorteilhaft mit solchen Maßnahmen bewirkt werden, die Abhängigkeiten von der Verdichtereintrittstemperatur zeigen, wie beispielsweise die Nassverdichtung bzw. das Wet-Compression.

Zweckmäßigerweise wird bzw. werden die genau eine Maßnahme oder eine oder mehrere von den mehreren Maßnahmen zusätzlich und/oder anstelle eines und/oder mehrerer bereits eingeleiteten Maßnahmen eingeleitet. Durch eine zusätzliche Einleitung kann auf besonders einfache Weise eine stärkere Veränderung, insbesondere Steigerung, der Nutzleistung der Gasturbinenanlage bewirkt werden. Vorteilhafterweise kann durch eine Einleitung anstelle einer und/oder mehreren bereits eingeleiteten Maßnahmen eine Einhaltung gewisser Randbedingungen, beispielsweise die Einhaltung einer maximal zulässigen Gasturbinenleistung oder eines maximal zulässigen Wassermassenstromes, erreicht werden.

Des Weiteren kann vorgeschlagen werden, dass die zusätzliche Einleitung und/oder die Einleitung anstelle in einer vorgebbaren zeitlichen Abfolge zu dem und/oder den bereits eingeleiteten Maßnahmen erfolgt bzw. erfolgen. So kann auf einfache Weise sichergestellt werden, dass gewisse Grenzwerte der Gasturbinenanlage, wie beispielsweise der maximal zulässige einzudüsende bzw. einzubringende Wassermassenstrom, nicht überschritten werden.

In einer weiteren Ausgestaltung der Erfindung kann die zeitliche Abfolge eine temporär kontinuierliche Bewirkung von zumindest zwei Maßnahmen oder eine temporär diskontinuierliche Bewirkung von zumindest zwei Maßnahmen hervorrufen. Dadurch kann auf einfache Weise erreicht werden, dass gegebene Randbedingungen, beispielsweise hinsichtlich der maximal zulässigen Veränderung der Nutzleistung der Gasturbinenanlage, eingehalten werden. Auch kann durch temporär diskontinuierliche Bewirkung erreicht werden, dass die Gasturbinenanlage zumindest temporär einen quasistationären Zustand erreicht.

Es wird ferner vorgeschlagen, dass das Verfahren zu einer Steuerung der Nutzleistung der Gasturbinenanlage eingesetzt wird. Dadurch kann die Nutzleistung der Gasturbine gemäß etwaiger Vorgaben bzw. Randbedingungen gesteuert werden. Unter der Wendung, dass das "Verfahren zu einer Steuerung der Nutzleistung der Gasturbinenanlage eingesetzt wird" soll verstanden werden, dass mittels des Verfahrens mittelbar die Nutzleistung der Gasturbinenanlage angesteuert wird.

Eine vorteilhafte Weiterbildung besteht darin, dass das Verfahren zu einer Regelung der Nutzleistung der Gasturbinenanlage eingesetzt wird, wobei bei dem Verfahren eine Regelgröße die Nutzleistung der Gasturbinenanlage ist, eine Stellgröße ein Massenstrom des in einen Verdichtereinlass der Gasturbinenanlage eingedüsten Wassers ist und eine Stellgröße ein Massenstrom des in eine Brennereinheit der Gasturbinenanlage eingedüsten Wassers ist. In einfacher Weise können so die Stellgrößen, also maßgebliche Betriebsparameter einzelner und/oder mehrerer Maßnahmen, beispielsweise des Nassverdichtungsverfahrens bzw. des Wet-Compression-Verfahrens und der NOx-Wassereindüsung, an die momentanen Umgebungsbedingungen und die zu erzielende Nutzleistung angepasst werden. Vorteilhafterweise kann so die Nutzleistung der Gasturbinenanlage über ein weites Spektrum an Umgebungsrandbedingungen, wie insbesondere die Lufttemperatur und die Luftfeuchte, nahezu konstant gehalten werden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammenfasst werden. Insbesondere sind diese Merkmale jeweils einzeln und in beliebiger geeigneter Kombination mit dem erfindungsgemäßen Verfahren, der erfindungsgemäßen Anordnung und der erfindungsgemäßen Gasturbinenlage gemäß den unabhängigen Ansprüchen kombinierbar.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen Schnitt durch einen erfindungsgemäße Gasturbinenanlage mit einer Anordnung zur Steuerung einer Nutzleistung,
- FIG 2: eine schematische Darstellung eines Regelkreises zur Regelung der Nutzleistung der Gasturbinenanlage,
- FIG 3: ein Diagramm mit regelungstechnisch relevanten Zustandsbereichen gemäß dem Ausführungsbeispiel aus FIG 2,
- FIG 4: ein Diagramm mit einem Verlauf zweier Wassermassenstromkurven über der Zeit,
- FIG 5: ein Diagramm mit einem weiteren Verlauf zweier Wassermassenstromkurven über der Zeit,
- FIG 6: ein Diagramm einem Verlauf dreier Wassermassen-stromkurven über der Zeit und
- FIG 7: ein Diagramm einem weiteren Verlauf dreier Wasser-massenstromkurven über der Zeit.

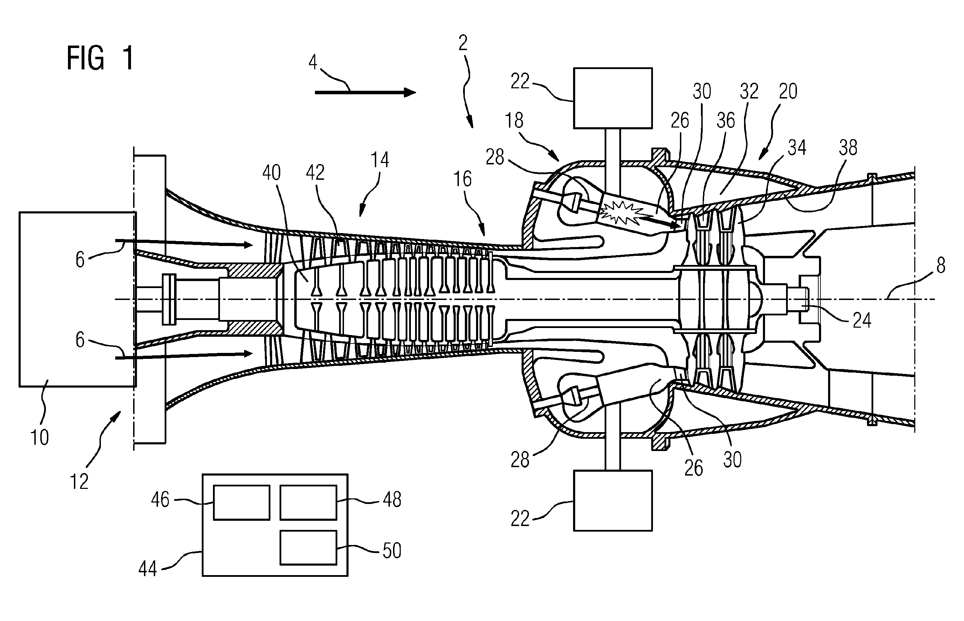

FIG 1 zeigt in eine schematische Darstellung einer Gasturbinenanlage 2. Im folgenden Text werden die Begriffe Gasturbinenanlage und Gasturbine äquivalent verwendet. Die Gasturbine 2 weist unter anderem in Hauptströmungsrichtung 4 eines Strömungsmediums 6, wie beispielsweise Luft, bzw. in Längsrichtung einer Rotationsachse 8 eine Wassereindüsungsvorrichtung 10 zum Eindüsen von Wasser in einen Verdichtereintritt 12, einen Verdichter 14, einen Verdichteraustritt 16, eine Brennereinheit 18 und eine Turbineneinheit 20 auf. Außerdem weist die Gasturbine 2 eine Wassereindüsungsvorrichtung 22 zum Eindüsen von Wasser in die Brennereinheit 18 auf. Die Wassereindüsungsvorrichtung 22 ist im gegebenen Ausführungsbeispiel zweiteilig dargestellt bzw. rotationssymmetrisch zur Rotationsachse 8 ausgeführt, was selbstverständlich nicht zwingend der Fall sein muss.

Die Gasturbine weist zudem eine Antriebwelle 24 auf, die um die Rotationsachse 8 rotierbar ist und sich longitudinal entlang der Gasturbine 2 erstreckt. Die Antriebswelle 24 verbindet die Turbineneinheit 20 antriebs- bzw. drehfest mit dem Verdichter 14.

Während eines Betriebs der Gasturbine 2 wird das Strömungsmedium 6, vor einem Eintritt in den Verdichter 14 mittels der Wassereindüsungsvorrichtung 10 befeuchtet. D.h. mittels der Wassereindüsungsvorrichtung 10 wird Wasser in den Verdichtereintritt 12 des Verdichters 14 eingedüst. Das Strömungsmedium 6, welches nun am Verdichtereintritt 12 eintritt, wird im Verdichter 14 verdichtet und über den Verdichteraustritt 16 der Brennereinheit 18, die beispielsweise in Form eine Ringbrennereinheit ausgeführt sein kann, zugeführt. Die Brennereinheit 18 weist eine oder mehreren Brennkammern 26 mit jeweils einem Brenner 28 auf.

Das aus dem Verdichter 14 kommende, komprimierte Strömungsmedium 6 wird zumindest anteilig in die Brennereinheit 18 bzw. die Brennkammer 26 geleitet und dort mit einem gasförmigen oder flüssigen Treibstoff gemischt. Das derart in der Brennereinheit 18 gebildete zundfähige Gemisch wird dann gezündet bzw. verbrannt und das Brenngas bzw. das Arbeitsgas der Verbrennung wird über einen Übergangskanal 30 zu der Turbineneinheit 20 der Gasturbine 2 geleitet.

Die Turbineneinheit 20 weist mehrere mit der Antriebswelle 24 verbundene Turbinenräder 32 mit Turbinenschaufeln 34 auf. Zudem sind axial zwischen den Turbinenrädern 32 Leitschaufeln 36 angeordnet. Die Leitschaufeln 36 der Turbineneinheit 20 sind wiederum mit einem Stator 38 verbunden.

Das Verbrennungsgas aus der Brennkammer bzw. den Brennkammern 26 tritt in die Turbineneinheit 20 ein und treibt die Turbinenschaufeln 34 derart an, dass die Antriebswelle 24 rotatorisch angetrieben wird und ein Drehmoment um die Längsachse 8 der Gasturbine 2 generiert wird. Die Leitschaufeln 36 dienen dazu, das Verbrennungsgas bzw. das Arbeitsgas auf die Turbinenschaufeln 34 lenken, also der Strömungsführung.

Der Verdichter 14 weist eine Abfolge von axial angeordneten Verdichterleitschaufelstufen 40 und Verdichterschaufelstufen 42 auf. Diese werden durch die Antriebswelle 24, also durch das in der Turbineneinheit 20 generierte Drehmoment angetrieben, also in eine Drehung um die Längsachse 8 versetzt, wodurch das komprimierte Strömungsmedium 6 von der Gasturbine 2 selbst generiert wird sobald diese sich in einem entsprechenden Betriebszustand befindet.

Die Gasturbine 2 weist des Weiteren eine Steueranordnung 44 auf, welche zu einer besseren Darstellbarkeit in FIG 1 außerhalb bzw. baulich getrennt von der Gasturbine 2 dargestellt ist. Die Steueranordnung 44 weist eine Ermittlungseinrichtung 46, eine Steuereinheit 48 und einen Signalgeber 50 auf. Die Ermittlungseinrichtung 46 ist dazu vorbereitet, zumindest eine Gasturbinenzustandsgröße, beispielsweise die Nutzleitung der Gasturbine und/oder die Verdichtereintrittstemperatur, zu ermitteln. Der Signalgeber 50 ist dazu vorbereitet, Signale an die Wassereindüsungsvorrichtung 10 und/oder die Wassereindüsungsvorrichtung 22 zu leiten. Die Steueranordnung 44 dient unter anderem zu einer Steuerung der Nutzleistung der Gasturbine 2.

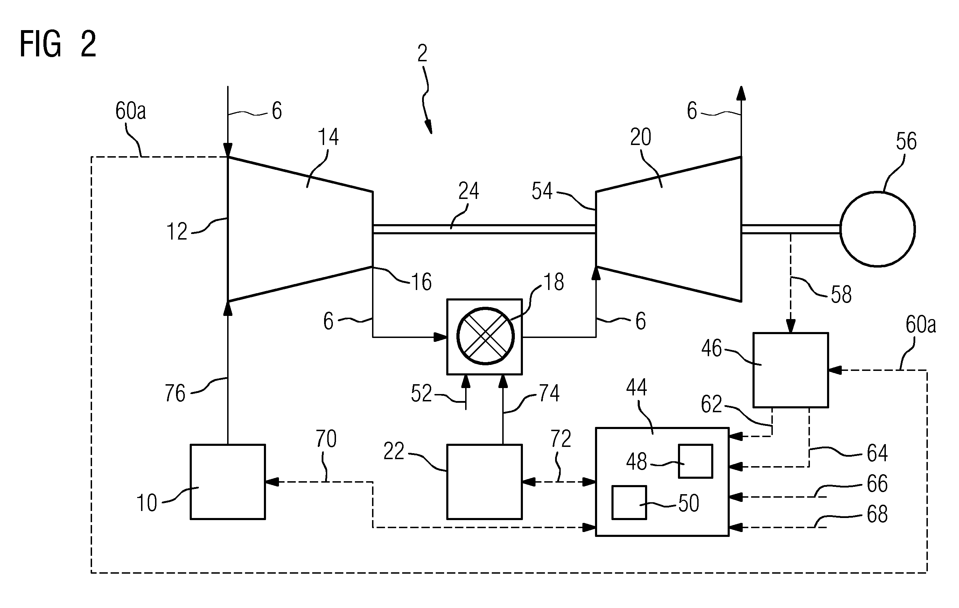

Eine schematische Darstellung eines Regelkreises zur Regelung der Nutzleistung der Gasturbinenanlage 2 ist in FIG 2 dargestellt und nachfolgend beschrieben. Während eines Betriebs der Gasturbinenanlage 2 strömt das Strömungsmedium 6 aus einer nicht näher beschriebenen Umgebung in den Verdichtereintritt 12 der Gasturbinenanlage 2. Das Strömungsmedium 6 wird im Verdichter 14 komprimiert, tritt über den Verdichteraustritt 16 aus dem Verdichter 14 aus und gelangt nachfolgend in die Brennereinheit 18.

In der Brennereinheit 18 wird aus dem komprimierten Strömungsmedium 6 unter Zuführung eines Kraftstoffmassenstromes 52, beispielsweise eines Massenstromes eines Gases, ein zündfähiges Gemisch hergestellt und zur Zündung gebracht, wobei die Zündung insbesondere kontinuierlich abläuft.

Das gezündete Strömungsmedium 6 verlässt die Brennereinheit 18 in Hauptströmungsrichtung 4 (siehe FIG 1) und tritt über den Turbineneintritt 54 in die Turbineneinheit 20 der Gasturbinenanlage 2 ein und versetzt die Turbinenräder 32 (siehe FIG 1) in Rotation, derart, dass ein Drehmoment auf die Antriebswelle 24 übertragen wird.

Eine aus dem derart generierten Drehmoment und der Drehzahl der Antriebswelle 24 resultierende Leistung der Gasturbinenanlage 2 wird zu einem Teil an den antriebswellenseitig montierten Verdichter 14 zur Verrichtung von Kompressionsarbeit übertragen. Ein anderer Teil der Leistung der Gasturbinenanlage 2 wird als Nutzleistung an einen Generator 56 übertragen und in diesem in elektrische Energie umgesetzt.

Die Ermittlungseinrichtung 46 erfasst bzw. ermittelt die Nutzleistung 58 der Gasturbinenanlage 2. Die Ermittlung der Nutzleistung 58 kann beispielsweise über einen hierfür geeignete Sensor oder eine anderweitige Messeinrichtung erfolgen, wobei der Sensor oder die Messeinrichtung auch integraler Bestandteil der Ermittlungseinrichtung 46 sein können. Außerdem erfasst bzw. ermittelt die Ermittlungseinrichtung 46 eine Verdichtereintrittstemperatur 60a.

Ausgehend von der Ermittlungseinrichtung 46 werden die jeweiligen Werte, also sog. Istwerte, der ermittelten Zustandsgrößen an die Steueranordnung 44 übermittelt. Ausgehend von der Ermittlungseinrichtung 46 werden ein Nutzleistungs-Istwert 62 und ein Verdichtereintrittstemperatur-Istwert 64 an die Steueranordnung 44 übermittelt.

Ein Nutzleistungs-Sollwert 66 und ein Temperaturvorgabewert 68 werden an der Steueranordnung 44, beispielsweise als konstante oder variable Eingabewerte, eingegeben oder anderweitig der Steueranordnung 44 verfügbar gemacht. Alternativ können der Nutzleistungs-Sollwert 66 und der Temperaturvorgabewert 68 in Form von konstant vorgegebenen oder über der Zeit veränderlichen Daten in der Steueranordnung 44 hinterlegt sein.

Die Steuereinheit 48, die nicht zwingend wie in FIG 2 dargestellt ein integraler Bestandteil der Steueranordnung 44 sein muss, vergleicht den Nutzleistungs-Istwert 65 mit dem Nutzleistungs-Sollwert 66 derart, dass eine etwaige Abweichung festegestellt werden kann. Außerdem vergleicht die Steuereinheit 48 den Verdichtereintrittstemperatur-Istwert 64 mit dem Temperaturvorgabewert 68 derart, dass zumindest eine Über-oder Unterschreitung des Temperaturvorgabewerts 68 durch den Verdichtereintrittstemperatur-Istwert 64 festgestellt werden kann.

Die Steueranordnung 44 ist dazu vorbereitet, zumindest eine Maßnahme unter mehreren in der Gasturbinenanlage 2 implementieren Maßnahmen zum Verändern der Nutzleistung 58 der Gasturbinenanlage 2 auszuwählen und diese zumindest eine ausgewählte Maßnahme, zum Verändern der Nutzleistung 58 der Gasturbinenanlage 2 einzuleiten. Im vorliegenden Ausführungsbeispiel können die zur Rede stehenden Maßnahmen durch die verdichterseitige Wassereindüsungsvorrichtung 10 und brennereinheitseitige Wassereindüsungsvorrichtung 22 bewirkt werden. Die verdichterseitige Wassereindüsungsvorrichtung 10 dient einer Umsetzung bzw. Bewirkung des sog. Wet-Compression-Verfahrens (dt.: Nassverdichtungsverfahren). Die brennereinheitseitige Wassereindüsungsvorrichtung 22 dient einer Umsetzung bzw. Bewirkung der sog. NOx-Wassereindüsung.

Das Auswählen und das Einleiten der Maßnahme durch die Steueranordnung 44 geschieht dabei in Abhängigkeit von dem Vergleich des Nutzleistungs-Istwerts 62 mit dem Nutzleistungs-Sollwert 66 und dem Vergleich des Verdichtereintrittstemperatur-Istwerts 64 mit dem Temperaturvorgabewert 68.

Dabei ergeben sich die folgenden wesentlichen Steuerungs- bzw. Regelungszustände:
Wird durch die Steueranordnung 44 bzw. die Steuereinheit 48 festgestellt, dass der Nutzleistungs-Istwert 62 den Nutzleistungs-Sollwert 66 um einen gewissen vorgebbaren Wert unterschreitet, wird durch den Signalgeber 50 ein Steuersignal 70 an die Wassereindüsungsvorrichtung 10 und/oder ein Steuersignal 72 an die Wassereindüsungsvorrichtung 22 übermittelt.

Ob die Wassereindüsungsvorrichtung 10 oder die Wassereindüsungsvorrichtung 22 zum Einsatz kommt oder ob beide Wassereindüsungsvorrichtungen 10 und 22 zum Einsatz kommen ergibt sich aus dem Vergleich des Verdichtereintrittstemperatur-Istwerts 64 mit dem Temperaturvorgabewert 68.

Ergibt der Vergleich des Verdichtereintrittstemperatur-Istwerts 64 mit dem Temperaturvorgabewert 68, dass die Verdichtereintrittstemperatur-Istwerts 64 den Temperaturvorgabewert 68 um einen gewissen vorgebbaren Wert unterschreitet, wird durch den Signalgeber 50 ein Steuersignal 72 an die brennereinheitseitige Wassereindüsungsvorrichtung 22 übermittelt. Die Wassereindüsungsvorrichtung 22 bewirkt eine Eindüsung eines Wassermassenstromes 72 in die Brennereinheit 18 zur Erhöhung der Nutzleistung 58.

Ergibt der Vergleich des Verdichtereintrittstemperatur-Istwerts 64 mit dem Temperaturvorgabewert 68, dass die Verdichtereintrittstemperatur-Istwerts 64 den Temperaturvorgabewert 68 um einen gewissen vorgebbaren Wert überschreitet, wird durch den Signalgeber 50 ein Steuersignal 70 an die verdichtereintrittsseitige Wassereindüsungsvorrichtung 10 übermittelt. Die Wassereindüsungsvorrichtung 10 bewirkt eine Eindüsung eines Wassermassenstromes 74 in den Verdichtereintritt 12 zur Erhöhung der Nutzleistung 58.

Eine sich durch das Bewirken der Maßnahme bzw. der Maßnahmen einstellende Erhöhung der Nutzleistung 58 wird durch die Ermittlungseinrichtung 46 ermittelt, der erhöhte Nutzleistungs-Istwert 62 an die Steueranordnung 44 übermittelt und mit dem Nutzleistungs-Sollwert 66 verglichen.

Sollte eine weitere Veränderung, insbesondere Erhöhung, der Nutzleistung 58 der Gasturbinenanlage gefordert sein wird zusätzlich zum Steuersignal 70 an die verdichtereintrittsseitige Wassereindüsungsvorrichtung 10 das Steuersignal 72 an die verdichtereintrittsseitige Wassereindüsungsvorrichtung 22 übermittelt. D.h. beide durch Wassereindüsungsvorrichtungen 10 und 22 bewirkten Maßnahmen werden eingeleitet, wodurch insbesondere unter besonders hohen Umgebungslufttemperaturen eine hohe, nahezu konstante Nutzleistung 58 erreicht werden kann.

Die jeweiligen Wassermassenströme 74 und/oder 76 werden in Abhängigkeit der Höhe der ermittelten Abweichung des Nutzleistungs-Istwerts 62 vom Nutzleistungs-Sollwert 66 gesteuert. Über die Signale 70 und 72 kann eine Rückmeldung der jeweiligen Werte der Wassermassenströme 74 und/oder 76 an die Steueranordnung erfolgen. Die Steueranordnung 44 kann dabei insbesondere dazu vorbereitet sein, die Steuerung der Wassereindüsungsvorrichtungen 10 und 22 so vorzunehmen, dass ein maximal zulässiger Wassermassenstrom, der sich insbesondere aus der Summe Wassermassenströme 74 und 76 ergibt, nicht überschritten wird.

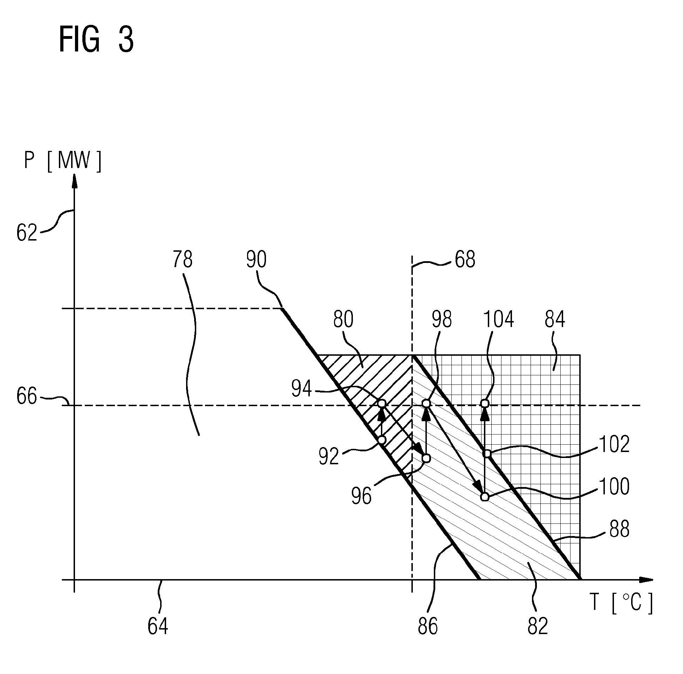

FIG 3 zeigt ein Diagramm mit regelungstechnisch relevanten Zustandsbereichen (78, 80, 82, 84) der Gasturbinenanlage in Abhängigkeit von dem Nutzleistungs-Istwert 62 (Ordinate [MW]) und dem Verdichtereintrittstemperatur-Istwert 64 (Abszisse [°C]) gemäß dem Ausführungsbeispiel aus FIG 2. Anhand des Diagramms in FIG 3 kann unter anderem verdeutlicht werden, unter welchen Bedingungen welche der Maßnahmen zur Veränderung der Nutzleistung der Gasturbine - hier insbesondere die Maßnahmen Wet-Compression und NOx-Wassereindüsung - eingeleitet wird bzw. werden.

Im Zustandsbereich 80 wird die NOx-Wassereindüsung bewirkt, im Zustandsbereich 82 das Wet-Compression-Verfahren. Im Zustandsbereich 84 werden beide Verfahren in Kombination vorgenommen. Bei der Festlegung bzw. Zuweisung der Zustandsbereiche 80, 82 und 84 wird unter anderem berücksichtigt, dass mittels des Wet-Compression Verfahrens ein im Vergleich zur NOx-Wassereindüsung höherer Wirkungsgrad der Gasturbinenanlage erreichbar ist. Weiterhin ist berücksichtigt, dass es eine Grenztemperatur gegen Eisbildung im Verdichtereintritt der Gasturbinenanlage gibt, unterhalb derer das Wet-Compression-Verfahren nicht eingesetzt werden soll, da es ansonsten zu Vereisungen kommen kann.

Insbesondere da durch den Betrieb der Gasturbinenanlage unter Bewirkung des Wet-Compression-Verfahrens im Vergleich zu einem Betrieb unter Bewirkung des NOx-Wassereindüsung ein besserer Wirkungsgrad erzielt werden kann, ist erstgenannter Betrieb zu bevorzugen und die NOx-Wassereindüsung möglichst klein zu halten.

Der Nutzleistungs-Sollwert 66 und der Temperaturvorgabewert 68 sind in Form strichlierter Linien eingezeichnet. Eine Leistungskurve 86 zeigt den Verlauf des Nutzleistungs-Istwerts 62 über dem Verdichtereintrittstemperatur-Istwert 64 für den Fall, dass keine Regelung zur Veränderung des Nutzleistungs-Istwertes 62 vorgenommen wird, wobei mit steigendem Verdichtereintrittstemperatur-Istwert 64 der Nutzleistungs-Istwert 62 der Gasturbinenanlage abfällt.

Ausgehend von einem Betriebszustand 90 unterschreitet die Leistungskurve 86 über dem steigenden Verdichtereintrittstemperatur-Istwert 64 die strichliert eingezeichnete Linie des Nutzleistungs-Sollwerts 66 bis hin zu einem Betriebszustand 92. D.h. mit steigender Verdichtereintrittstemperatur nimmt die Nutzleistung der Gasturbinenanlage ab und fällt unter den Nutzleistungs-Sollwert 66.

Im Betriebszustand 92 wird zur Erhöhung der Nutzleistung auf den Nutzleistungs-Sollwert 66, also zum Erreichen eines Betriebszustands 94, die NOx-Wassereindüsung eingeleitet (vgl. FIG 2). Die NOx-Wassereindüsung wird im regelungstechnisch relevanten Zustandsbereich 80, insbesondere unterhalb Nutzleistungs-Sollwerts 66, eingeleitet, da in diesem Bereich das Wet-Compression-Verfahren wegen der noch nicht erreichten Grenztemperatur gegen Eisbildung (hier: Temperaturvorgabewert 68) nicht eingesetzt werden soll. Bei Bewirkung des Wet-Compression-Verfahrens unterhalb des Temperaturvorgabewerts 68 kann es zu einer Eisbildung innerhalb des Verdichters der Gasturbinenanlage kommen, was die Maschinenintegrität negativ beeinflusst.

Ausgehend vom Betriebszustand 94 kommt es bei einem weiteren Ansteigen des Verdichtereintrittstemperatur-Istwerts 64 zu einem Abfall des Nutzleistungs-Istwerts 62 auf einen Wert unterhalb des Nutzleistungs-Sollwerts 66 bis hin zu einem Betriebszustand 96. Dabei wird der Zustandsbereich 80 bei Überschreiten des Temperaturvorgabewerts 68 verlassen.

Im Betriebszustand 96 wird zur Erhöhung der Nutzleistung auf den Nutzleistungs-Sollwert 66, also zum Erreichen eines Betriebszustands 98, ein Wet-Compression-Verfahren eingeleitet (vgl. FIG 2). Dabei wird das Wet-Compression-Verfahren im regelungstechnisch relevanten Zustandsbereich 82, insbesondere unterhalb Nutzleistungs-Sollwerts 66, eingeleitet, da in diesem Zustandsbereich die Grenztemperatur gegen Eisbildung bzw. der Temperaturvorgabewert 68 überschritten ist.

Ausgehend vom Betriebszustand 98 kommt es bei einem weiteren Ansteigen des Verdichtereintrittstemperatur-Istwerts 64 zu einem Abfall des Nutzleistungs-Istwerts 62 auf einen Wert unterhalb des Nutzleistungs-Sollwerts 66 bis hin zu einem Betriebszustand 100. In diesem Betriebszustand 100 kann durch ein Einleiten des Wet-Compression-Verfahrens eine maximale Steigerung des Nutzleistungs-Istwerts 62 bis zum Betriebszustand 102 erreicht werden. Der Betriebszustand 102 liegt auf der Grenzkurve 88 der Zustandsbereiche 82 und 84. Eine weitere Steigerung der Nutzleistung nur mittels des Wet-Compression-Verfahrens kann an diesem Betriebspunkt nicht mehr möglich und/oder nicht mehr zulässig sein, beispielsweise weil ein maximal zulässiger Wassermassenstrom zur Eindüsung in den Verdichtereintritt ansonsten überschritten werden müsste.

Oberhalb der Grenzkurve 88, also im Zustandsbereich 84, erfolgt eine weitere Erhöhung des Nutzleistungs-Istwerts 62 auf den Nutzleistungs-Sollwerts 66 durch eine zu dem Wet-Compression-Verfahren zusätzliche Einleitung der NOx-Wassereindüsung. Der Betriebszustand 104 wird also durch ein gleichzeitiges Bewirken des Wet-Compression-Verfahren und der NOx-Wassereindüsung gemäß dem Ausführungsbeispiel aus FIG 2 erreicht.

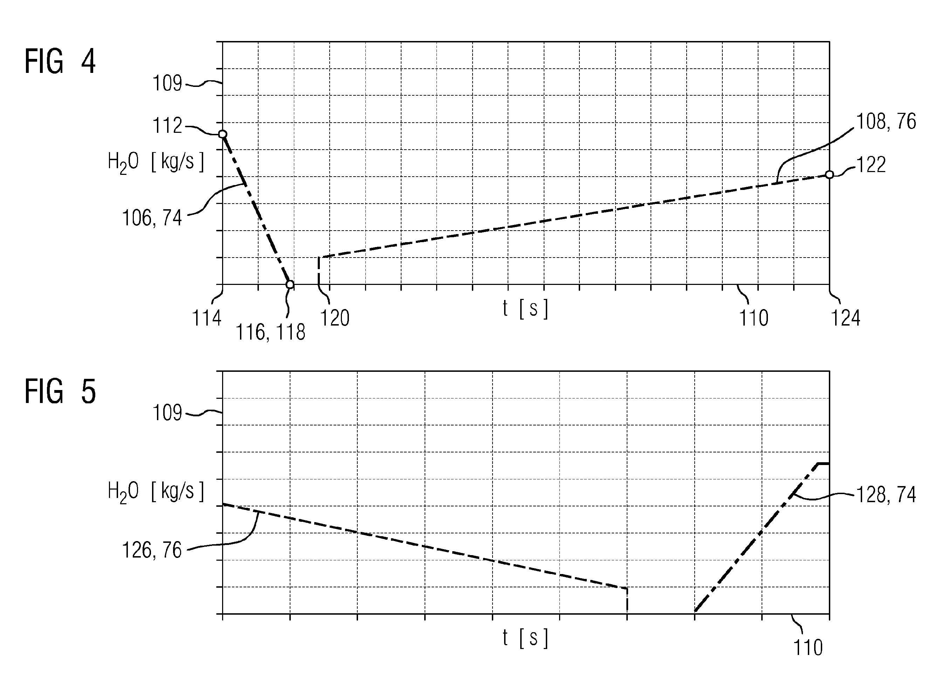

FIG 4 zeigt ein Diagramm mit zwei Wassermassenstromkurven 106 und 108 (Ordinate: Massenstromachse 109 [kg/s]) über der Zeitachse 110 (Abszisse [s]) gemäß dem Ausführungsbeispiel aus FIG 2.

Aus dem Diagramm ist insbesondere eine sog. Umschaltung zwischen zwei Fahrweisen der Gasturbinenanlage bzw. zwischen zwei Maßnahmen mit einem zeitlich begrenzten sog. trockenen Betrieb der Gasturbinenanlage ersichtlich.

Die Wassermassenstromkurve 106 zeigt einen Verlauf des Wassermassenstromes 74, der durch die brennereinheitseitige Wassereindüsungsvorrichtung 22 zur Bewirkung der NOx-Wassereindüsung eingeleitet wird (74, 22: vgl. FIG 2).

Die Wassermassenstromkurve 108 zeigt einen Verlauf des Wassermassenstromes 76, der durch die verdichtereintrittsseitige Wassereindüsungsvorrichtung 10 zur Bewirkung des Wet-Compression-Verfahrens eingeleitet wird (76, 10: vgl. FIG 2).

Ausgehend von einem Massenstromwert 112 zu einem Zeitpunkt 114 wird der Wassermassenstrom 74 linear verringert, derart, dass zu einem Zeitpunkt 116 ein Massenstromwert 118 erreicht wird bzw. bis es zu einer zumindest temporären Abschaltung des Wassermassenstromes 74 bzw. der Wassereindüsungsvorrichtung 22 kommt (vgl. FIG 1, 2).

Zu einem Zeitpunkt 120 wird der Wassermassenstrom 76 eingeleitet bzw. die Wassereindüsungsvorrichtung 10 (vgl. FIG 1, 2) angesteuert und es kommt zu einem - nicht notwendigerweise - linearen Anstieg der Wassermassenstromkurve 108 bis zu einem Massenstromwert 122 zum Zeitpunkt 124.

Gemäß den Massenstromkurven 106 und 108 werden die Wassermassenströme 76 und 76 derart bewirkt, dass es zu einer temporär diskontinuierlichen Bewirkung kommt. Im Zeitbereich zwischen den beiden Zeitpunkten 120 und 116 findet demnach ein sog. Trockenbetrieb der Gasturbinenanlage 2 (vgl. FIG 1, 2) statt.

FIG 5 zeigt ein Diagramm mit zwei weiteren Wassermassenstromkurven 126 und 128 (Ordinate: Massenstromachse 109 [kg/s]) über der Zeitachse 110 (Abszisse [s]) gemäß dem Ausführungsbeispiel aus FIG 2.

Die Wassermassenstromkurve 126 zeigt einen Verlauf des Wassermassenstromes 76, der durch die verdichtereintrittsseitige Wassereindüsungsvorrichtung 10 zur Bewirkung des Wet-Compression-Verfahrens eingeleitet wird (76, 10: vgl. FIG 2).

Die Wassermassenstromkurve 128 zeigt einen Verlauf des Wassermassenstromes 74, der durch die brennereinheitseitige Wassereindüsungsvorrichtung 22 zur Bewirkung der NOx-Wassereindüsung eingeleitet wird (74, 22: vgl. FIG 2).

D.h. im Gegensatz zu dem durch das Diagramm in FIG 4 gegebenen Ausführungsbeispiel wird hier zunächst das Wet-Compression-Verfahren bewirkt, dann die NOx-Wassereindüsung.

Diese Vorgehensweise ist insbesondere bei über der Zeit fallender Verdichtereintrittstemperatur vorteilhaft.

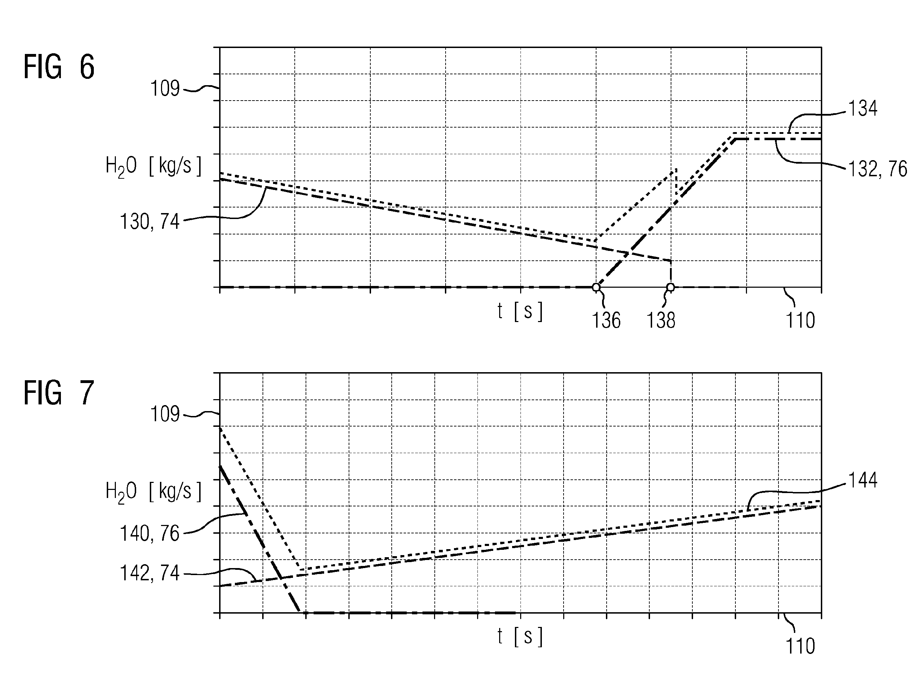

FIG 6 zeigt ein Diagramm mit drei Wassermassenstromkurven 130, 132 und 134 (Ordinate: Massenstromachse 109 [kg/s]) über der Zeitachse 110 (Abszisse [s]) gemäß dem Ausführungsbeispiel aus FIG 2.

Aus dem Diagramm ist insbesondere ein sog. quasigleichzeitiger Betrieb zweiter Maßnahmen, also des Wet-Compression-Verfahrens und der NOx-Wassereindüsung ersichtlich, welcher insbesondere zur Reduzierung der Umschaltdauer bzw. von Leistungseinbußen durch die Umschaltung vorteilhaft ist.

Die Wassermassenstromkurve 130 zeigt einen Verlauf des Wassermassenstromes 74, der durch die brennereinheitseitige Wassereindüsungsvorrichtung 22 zur Bewirkung der NOx-Wassereindüsung eingeleitet wird (74, 22: vgl. FIG 2).

Die Wassermassenstromkurve 132 zeigt einen Verlauf des Wassermassenstromes 76, der durch die verdichtereintrittsseitige Wassereindüsungsvorrichtung 10 zur Bewirkung des Wet-Compression-Verfahrens eingeleitet wird (76, 10: vgl. FIG 2).

Die strichliert eingezeichnete Wassermassenstromkurve 134 zeigt einen Verlauf der Summen der Wassermassenströme 74 und 76.

Im Zeitbereich zwischen den beiden Zeitpunkten 136 und 138 kommt es zu einer zeitlichen Überschneidung der Wassermassenstromkurven 130 und 132 also zu einer temporär kontinuierlichen Bewirkung der Wassermassenströme 76 und 74 (vgl. FIG 2). D.h. es kommt zu einem quasi-gleichzeitigen Betrieb bzw. Bewirken des Wet-Compression-Verfahrens und der NOx-Wassereindüsung, was insbesondere zur zeitlichen Verkürzung von Phasen mit Leistungseinbußen bzw. der Umschaltdauer vorteilhaft ist.

FIG 7 zeigt ein Diagramm mit drei weiteren Wassermassenstromkurven 140, 142 und 144 (Ordinate: Massenstromachse 109 [kg/s]) über der Zeitachse 110 (Abszisse [s]) gemäß dem Ausführungsbeispiel aus FIG 2.

Die Wassermassenstromkurve 140 zeigt einen Verlauf des Wassermassenstromes 76, der durch die verdichtereintrittsseitige Wassereindüsungsvorrichtung 10 zur Bewirkung des Wet-Compression-Verfahrens eingeleitet wird (76, 10: vgl. FIG 2).

Die Wassermassenstromkurve 142 zeigt einen Verlauf des Wassermassenstromes 74, der durch die brennereinheitseitige Wassereindüsungsvorrichtung 22 zur Bewirkung der NOx-Wassereindüsung eingeleitet wird (74, 22: vgl. FIG 2).

Die strichliert eingezeichnete Wassermassenstromkurve 144 zeigt einen Verlauf der Summen der Wassermassenströme 74 und 76.

D.h. im Gegensatz zu dem durch das Diagramm in FIG 6 gegebenen Ausführungsbeispiel wird hier zunächst das Wet-Compression-Verfahren bewirkt, dann die NOx-Wassereindüsung.

Diese Vorgehensweise ist insbesondere bei über der Zeit fallender Verdichtereintrittstemperatur vorteilhaft.

## Patentansprüche

1. Verfahren zum Verändern einer Nutzleistung (58) einer Gasturbinenanlage (2),
**dadurch gekennzeichnet, dass**
- eine Nutzleistung (58) der Gasturbinenanlage ermittelt wird,
- diese Nutzleistung (58) mit einem Nutzleistungs-Sollwert (66) verglichen wird,
- in Abhängigkeit dieses Vergleichs und zumindest eines Wertes zumindest einer Gasturbinenzustandsgröße (60) zumindest eine Maßnahme (74, 76) zum Verändern der Nutzleistung (58) aus mehreren in der Gasturbinenanlage (2) implementierten Maßnahmen (74, 76) ausgewählt wird und
- diese zumindest eine ausgewählte Maßnahme (74, 76) zum Verändern der Nutzleistung (58) der Gasturbinenanlage (2) eingeleitet wird.

2. Verfahren nach Anspruch 1,
**dadurch gekennzeichnet, dass** die zumindest eine Maßnahme (74, 76) der in der Gasturbinenanlage implementierten Maßnahmen (74, 76)
- eine Temperatur eines die Gasturbinenanlage (2) durchströmenden Strömungsmediums (6) verändert, insbesondere kühlt und/oder
- eine Feuchtigkeit eines die Gasturbinenanlage (2) durchströmenden Strömungsmediums (6) verändert, insbesondere erhöht und/oder
- einen Massenstrom eines die Gasturbinenanlage (2) durchströmenden Strömungsmediums (6) verändert, insbesondere erhöht und/oder
- einen Radialspalt zwischen einem Rotor und einer Gehäusewand der Gasturbinenanlage verändert, insbesondere verringert und/oder
- einen Anstellwinkel zumindest einer Schaufel eines Verdichters der Gasturbinenanlage verändert.

3. Verfahren nach einem der vorherigen Ansprüche,
**dadurch gekennzeichnet, dass** zumindest eine aus den mehreren implementierten Maßnahmen (74, 76) eingeleitete Maßnahme (74 o. 76) mittels
- eines Nassverdichtungsverfahrens (Wet Compression (WetC)) und/oder
- einer NOx-Wassereindüsung und/oder
- einer Verdichtereintrittsluftkühlung (Compression Inlet Air Chilling (CIAC)) und/oder
- einer hydraulischen Rotorspaltoptimierung und/oder
- einer Leitschaufelverstellung bewirkt wird.

4. Verfahren nach einem der vorherigen Ansprüche,
**dadurch gekennzeichnet, dass** die zumindest eine Gasturbinenzustandsgröße (60)
- eine Verdichtereintrittstemperatur (60a) und/oder
- ein Wirkungsgrad der Gasturbinenanlage (2) und/oder
- eine Emission der Gasturbinenanlage (2) ist.

5. Verfahren nach einem der vorherigen Ansprüche,
**dadurch gekennzeichnet, dass** der zumindest eine Wert der zumindest einen Gasturbinenzustandsgröße (60)
- ein aktuell ermittelter Wert (64) und/oder
- ein vorgebbarer maßnahmenspezifischer Wert (68) ist.

6. Verfahren nach einem der vorherigen Ansprüche, durchgeführt jeweils für eine Mehrzahl aufeinanderfolgender Zeitpunkte.

7. Verfahren nach einem der vorherigen Ansprüche,
**dadurch gekennzeichnet, dass** die Gasturbinenzustandsgröße (60) eine Verdichtereintrittstemperatur (60a) ist, der Wert der Gasturbinenzustandsgröße (60) ein aktuell ermittelter Wert (64) ist, wobei bei einem Erreichen eines vorgebbaren Wertes (68) einer Verdichtereintrittstemperatur (60a) genau eine Maßnahme (74 o. 76) oder mehrere Maßnahmen (74, 76) eingeleitet wird bzw. werden.

8. Verfahren nach Anspruch 7,
**dadurch gekennzeichnet, dass** die genau eine Maßnahme (74 o. 76) oder eine oder mehrere von den mehreren Maßnahmen (74, 76) zusätzlich und/oder anstelle einer und/oder mehreren bereits eingeleiteten Maßnahmen eingeleitet wird bzw. werden.

9. Verfahren nach Anspruch 8,
**dadurch gekennzeichnet, dass** die zusätzliche Einleitung und/oder die Einleitung anstelle in einer vorgebbaren zeitlichen Abfolge zu dem und/oder den bereits eingeleiteten Maßnahmen erfolgt bzw. erfolgen.

10. Verfahren () nach Anspruch 9,
**dadurch gekennzeichnet, dass** die zeitliche Abfolge eine temporär kontinuierliche Bewirkung von zumindest zwei Maßnahmen oder eine temporär diskontinuierliche Bewirkung von zumindest zwei Maßnahmen hervorruft.

11. Verfahren nach einem der vorhergehenden Ansprüche, eingesetzt zu einer Steuerung der Nutzleistung (58) der Gasturbinenanlage (2).

12. Verfahren nach einem der vorhergehenden Ansprüche, eingesetzt zu einer Regelung der Nutzleistung (58) der Gasturbinenanlage (2), bei dem
- eine Regelgröße die Nutzleistung (58) der Gasturbinenanlage (2) ist,
- eine Stellgröße ein Massenstrom (76) des in einen Verdichtereinlass (12) der Gasturbinenanlage (2) eingedüsten Wassers ist und/oder
- eine Stellgröße ein Massenstrom (74) des in eine Brennereinheit (18) der Gasturbinenanlage (2) eingedüsten Wassers ist.

13. Anordnung (44) zur Steuerung einer Nutzleistung (58) einer Gasturbinenanlage (2),
**gekennzeichnet durch**
- eine Ermittlungseinrichtung (46) eingerichtet derart, dass
- die Nutzleistung (58) ermittelbar ist
und
- eine Steuereinheit (48) eingerichtet derart, dass
- die Nutzleistung (58) vergleichbar ist mit einem Nutzleistungs-Sollwert (66), wobei
- in Abhängigkeit dieses Vergleichs zumindest eine Maßnahme (74, 76) unter mehreren in der Gasturbinenanlage (2) implementieren Maßnahmen (74, 76) zum Verändern der Nutzleistung (58) der Gasturbinenanlage (2) auswählbar ist und
- diese zumindest eine ausgewählte Maßnahme (74, 76) zum Verändern der Nutzleistung (58) der Gasturbinenanlage (2) einleitbar ist.

14. Anordnung (44) nach Anspruch 13,
**dadurch gekennzeichnet dass**, die Steuereinheit (48) zur Einleitung einer Eindüsung von Wasser in einen Verdichtereintritt (12) und/oder zur Einleitung einer Eindüsung von Wasser in eine Brennereinheit (18) einer Gasturbinenanlage (2) vorbereitet ist.

15. Gasturbinenanlage (2) aufweisend einen Verdichtereintritt (12) und eine Brennereinheit (18),
**gekennzeichnet durch** eine Wassereindüsungsvorrichtung (10) zum Eindüsen von Wasser in den Verdichtereintritt (12), eine Wassereindüsungsvorrichtung (22) zum Eindüsen von Wasser in die Brennereinheit (18) und eine Anordnung (44) nach Anspruch 13 oder 14.
